# EUROPÄISCHE PATENTSCHRIFT

(11) **EP 4 101 684 B1**
(45) Veröffentlichungstag und Bekanntmachung des Hinweises auf die Patenterteilung: **11.10.2023**
(21) Anmeldenummer: 22177747.7
(22) Anmeldetag: 08.06.2022
(51) Int. Cl.: B60L 50/64, H01M 10/6556, H01M 10/6567, H01M 50/213

(54) **BATTERIEMODUL FÜR EIN KRAFTFAHRZEUG**
BATTERY MODULE FOR A MOTOR VEHICLE
MODULE DE BATTERIE POUR UN VÉHICULE AUTOMOBILE

(30) Priorität: 09.06.2021 DE 202021103122 U
(43) Veröffentlichungstag der Anmeldung: 14.12.2022
(73) Patentinhaber: Erbslöh Aluminium GmbH, 42553 Velbert (DE)
(72) Erfinder: SUCKE, Herr Norbert William, 47269 Duisburg (DE); LOECHTE, Lothar, 40723 Hilden (DE); BECKER, Andreas, 42897 Remscheid (DE); GOETZ, Herr Marcel, 42105 Wuppertal (DE); STOLBCHENKO, Mykhailo, 42329 Wuppertal (DE)
(74) Vertreter: Buse, Mentzel, Ludewig Patentanwaltskanzlei

(56) Entgegenhaltungen:
- EP-B1- 3 553 876
- CN-A- 107 706 328
- DE-A1-102017 125 004
- DE-B3-102017 125 153

## Beschreibung

Die Erfindung betrifft ein Batteriemodul für ein Kraftfahrzeug. Ein solches Batteriemodul umfasst einen Batterieraum zur Aufnahme mehrerer Batteriezellen. Dieser Batterieraum ist von einem aus Seitenwandprofilen gebildeten geschlossenen Rahmen umgeben und nach unten von einem Boden verschlossen. Beim Laden und Entladen dieser Batteriezellen entsteht Wärme, die aus den Batteriemodulen abgeführt werden muss. Hierzu umfassen die Batteriemodule Kühlelemente.

Es ist bekannt, Wärmetauscher für Kraftfahrzeuge aus Aluminiumprofilen durch Strangpressen herzustellen. Hierzu werden üblicherweise Legierungen der Serie 3000, also Aluminiumlegierungen mit dem Hauptlegierungselement Mangan eingesetzt. Diese Legierungen weisen neben einer guten Korrosionsresistenz eine sehr gute Umformbarkeit auf, wodurch sich Profile mit einer sehr geringen Wandstärke, mit filigranen Profilquerschnitten und mit einer Vielzahl von Hohlkammern erzielen lassen und dies bei einem sehr guten Höhe-zu-Breite-Verhältnis, was eine hohe Wärmeabführung ermöglicht. Diese Legierungen sind jedoch weich und weisen eine geringe mechanische Festigkeit auf. Die mechanischen Eigenschaften eines stranggepressten Profils aus einer solchen nicht aushärtbaren Legierung können auch nicht durch eine geeignete nachfolgende Wärmebehandlung verbessert werden. Profile, die für einen Boden eines Batteriemoduls eingesetzt werden, müssen jedoch eine ausreichende Festigkeit besitzen. Soll ein Batterieboden, beispielsweise für ein Kraftfahrzeug, aus Kühlprofilen aus einer 3000-Legierung hergestellt werden, sind entweder entsprechend massive Profilabmessungen und Wandstärken vorzusehen, oder zur Erfüllung der mechanischen Anforderungen muss eine dafür ausgelegte zusätzliche Haltestruktur vorgesehen werden, beispielsweise aus weiteren Strangpressprofilen oder aus Blechlagen.

Bei einer bekannten Ausführung gemäß DE 10 2017 125 004 A1 wird ein stranggepresstes Hohlprofil aus dem Aluminiummaterial gezeigt, welches breite massive Längsrändern zur Verbindung miteinander oder mit einem Rahmen besitzt. Diese Hohlprofile können auch im Bereich des Bodens eingesetzt werden. Bei einem weiteren bekannten Dokument DE 10 2015 111 749 A1 werden Hohlprofile als Kühlelemente verwendet und bilden einen Teil einer Sandwich-Konstruktion.

Es ist aus dem Dokument EP 3 553 876 B1 auch bekannt, den Boden des Batteriemoduls allein aus einem stranggepressten Aluminiumprofil zu bilden, welches relativ massiv ausgebildet ist. Um mehrere Kammern für das Kühlmedium zu bilden, sind zusätzliche Separatoren zur Bildung von Kühlkammern eingesetzt. Für den Einlass und Auslass des Kühlmediums wird das Profil endseitig mit Kühlmediumverteilern verbunden. Das Herstellungsverfahren ist aufwendig. Das Aluminiumprofil ist relativ massiv ausgebildet. Hier wird eine Verbesserung angestrebt.

Aufgabe der vorliegenden Erfindung ist es, ein Batteriemodul mit einer sehr guten Kühlung im Bodenbereich zur Verfügung zu stellen, wobei der Boden bei ausreichender Festigkeit konstruktiv einfach aufgebaut und auf einfache Weise herstellbar ist.

Diese Aufgabe wird mit einem Batteriemodul mit den Merkmalen des Anspruchs 1 erfüllt. Besonders vorteilhafte Ausführungen beschreiben die Unteransprüche.

Das neue Batteriemodul für ein Kraftfahrzeug umfasst einen Batterieraum zur Aufnahme mehrerer Batteriezellen. Dieser Batterieraum ist von einem aus Seitenwandprofilen gebildeten geschlossenen Rahmen umgeben und nach unten von einem Boden verschlossen. Der Boden besteht aus einem flachen Kühlprofil aus einer Aluminiumlegierung mit den Hauptlegierungselementen Magnesium und Silizium. Dieses Kühlprofil besteht aus mindestens einem stranggepressten Mehrkammerhohlprofil mit mehreren, nebeneinander angeordneten Kammern, welche durch Trennstege voneinander getrennt sind. Das Kühlprofil ist sehr filigran ausgebildet und hat eine hohe Anzahl von Kammern für den Durchfluss des Kühlmediums. Das Kühlprofil zeigt gute Wärmeübergangseigenschaften. So begünstigen geringe Wandstärken des Kühlprofils den Wärmeübergang von den Batteriezellen zum Kühlmedium, welches durch die Kammern des Kühlprofils fließt. Da die Breite des Kühlprofils mindestens dem 40-fachen der Höhe des Kühlprofils entspricht, ist die Effizienz des Wärmeübergangs hoch.

Es hat sich gezeigt, dass ein stranggepresstes Mehrkammerhohlprofil aus einer aushärtbaren Aluminiumlegierung, mit welcher sich solche filigranen Profile erzeugen und die guten Wärmeübergangseigenschaften erzielen lassen, für ein Kühlprofil als Boden eines Batteriemoduls geeignet ist. Zur Herstellung des Mehrkammerhohlprofils wird eine aushärtbare Al-Mg-Si-Aluminiumlegierung, nämlich eine 6XXX-Aluminiumlegierung, verwendet. Die Festigkeit wird durch einen geeigneten Wärmebehandlungsprozess im Anschluss an das Strangpressen des Halbzeuges gesteigert, so dass ein Profil mit hoher mechanischer Belastbarkeit erhalten wird. Bei einer bevorzugten Ausführung bestehen die Mehrkammerhohlprofile aus einer Al-Mg-Si-Legierungen mit einem Magnesiumanteil von maximal 0,9 Gew.-% und einem Kupferanteil von maximal 0,1 Gew%. Die Limitierung von Magnesium wird insbesondere dann vorgesehen, wenn ein Hartlötverfahren als Verbindungsverfahren des Kühlprofils mit weiteren Komponenten vorgesehen wird, da Magnesium mit dem Flussmittel reagiert.

Vorteilhaft ist, dass das stranggepresste Kühlprofil, welches aus einem oder mehreren flachen Mehrkammerhohlprofilen besteht, allein den Boden des Batteriemoduls bildet. Zusätzliche Haltekonstruktionen, Verstärkungsbleche oder Sandwichkonstruktionen sind nicht notwendig.

Das Kühlprofil wird von einem Kühlmedium durchströmt. Es ist vorgesehen, dass das Kühlmedium an einem ersten Ende des Kühlprofils durch einen Einlass einströmt und durch eine bestimmte Anzahl von Kammern des Kühlprofils, den ersten Kammern, fließt, beispielsweise durch die Hälfte der Kammern des Kühlprofils. Am anderen Ende des Kühlprofils wird die Strömungsrichtung des Kühlmediums geändert und nach der Strömungsumkehr werden zweite Kammern des Kühlprofils durchströmt bis das Kühlmedium am ersten Ende des Kühlprofils aus einem Auslass ausfließen kann. Die Kammern sind in bekannter Weise durch in Längsrichtung des Kühlprofils verlaufende Trennstege voneinander abgetrennt. Hierbei besitzt ein Trennsteg, nämlich der zwischen einer ersten Kammer und einer zweiten Kammer, eine größere Breite als die anderen Trennstege, welche jeweils zwischen den ersten Kammern und welche jeweils zwischen den zweiten Kammern vorhanden sind. So betragen die Wanddicke der schmalen Trennstege und ebenso die Wanddicke der Profilwand 0,8 mm bis 2 mm. Bei einer bevorzugten Ausführungsform liegt diese Wanddicke zwischen 1,0 mm und 1,5 mm. Die Breite des breiteren Trennstegs entspricht wenigstens dem 5-fachen der Breite der schmalen Trennstege.

Darüber hinaus ist bei einer vorteilhaften Ausführung auch die Wanddicke der parallel zu den Trennstegen verlaufenden Außenwände dicker ausgebildet als die sonstige Profilwand des Kühlprofils.

Wie beschrieben durchströmt ein Kühlmedium das Kühlprofil. Dies kann beispielsweise ein Wasser-Glykol-Gemisch, ein Thermoöl oder ein anderes bekanntes Kühlmedium sein. Zum Zu- und Ableiten des Kühlmediums werden an einem Ende des Kühlprofils Ausnehmungen am Kühlprofil vorgesehen. Hierzu ist das Kühlprofil an diesem einen Ende spanend bearbeitet worden. Es wurden die schmalen Trennstege endseitige gekürzt und in diesem Bereich auch die oberhalb der schmalen Trennstege vorhandene Profilwand entfernt. Der breitere Trennsteg bleibt jedoch erhalten. Die spanende Bearbeitung wird dadurch erleichtert, dass aufgrund des breiteren Trennstegs in der Mitte des Profils und der beiden breiteren Außenwände keine engen Toleranzen bei der Bearbeitung, nämlich der Ausbildung der Ausnehmungen, einzuhalten sind. Diese beispielsweise durch Fräsen erhaltenen Ausnehmungen an einem Ende des Kühlprofils werden von zusätzlichen Abdeckelementen, welche beispielsweise auch Anschlussflansche aufweisen, abgedeckt. Um eine Zirkulation des Kühlmediums zu gewährleisten, ist auch am entgegengesetzte Ende des Kühlprofils eine Ausnehmung vorhanden, die durch ein weiteres Abdeckungselement verschlossen wird, so dass der vorbeschrieben Kühlmediumstrom möglich wird. Diese Ausnehmung am anderen Ende des Kühlprofils wird durch eine endseitige Verkürzung aller Trennstege gebildet. Auch in diesem Bereich ist die oberhalb der Trennstege vorhandene Profilwand entfernt.

Die Abdeckelemente bestehen aus Edelstahl, Aluminium oder Kunststoff. Sie sind geformte Teile, z.B. tiefgezogene Blechteile oder spritzgegossene Kunststoffteile. Bei einer besonderen Ausführungsform sind Abdeckelemente integral mit einem Einlassstutzen bzw. einem Auslassstutzen ausgebildet. Diese Abdeckelemente sind mit dem Kühlprofil verbunden, z.B. durch Kleben. Sind die Abdeckelemente beispielsweise aus Aluminium gefertigt, kommen als Verbindungsverfahren auch Löten oder Schweißen infrage, wie beispielsweise ein Hartlötverfahren, ein Laserschweißverfahren oder ein Elektronenstrahlschweißverfahren.

Mit dem neuen Batteriemodul wird ein Modul mit einer effizienten Kühlung im Bodenbereich zur Verfügung gestellt, wobei der Boden einfach aufgebaut ist, nämlich nur aus dem Kühlprofil besteht, welches ein Mehrkammerhohlprofil oder auch mehrere miteinander am Längsrand verbundene Mehrkammerhohlprofile umfasst. Ein solches Mehrkammerhohlprofil ist durch Strangpressen einfach herstellbar, besteht aus einer filigran zu verarbeitenden 6XXX-Aluminiumlegierung und erhält durch eine nachfolgende Wärmebehandlung die notwendige Festigkeit für den Einsatz als Boden des Batteriemoduls. Die hohe mechanische Belastbarkeit und Biegesteifigkeit wird des Weiteren durch den massiv ausgebildeten breiteren Trennsteg und die breiten Längsränder unterstützt. Das Kühlprofil zeigt eine sehr gute Kühlung aufgrund der Vielzahl an Kammern für den Durchfluss des Kühlmediums, aufgrund der geringen Wandstärken des Kühlprofils und die Form des Profils mit einer 40-fachen Breite des Kühlprofils im Vergleich zur Höhe des Kühlprofils.

Die Erfindung wird nachfolgend an einem Ausführungsbeispiel anhand der Zeichnungen beschrieben. Es zeigen:
- Fig. 1: eine perspektivische Ansicht eines erfindungsgemäßen Batteriemoduls,
- Fig. 2: eine perspektivische Ansicht des Bodens des Batteriemoduls von Fig. 1,
- Fig. 3: den Kühlmediumfluss durch den in Fig. 2 gezeigten Boden,
- Fig. 4: ein Ende des Kühlprofils ohne Abdeckung und
- Fig. 5: das andere Ende des Kühlprofils ohne Abdeckung.

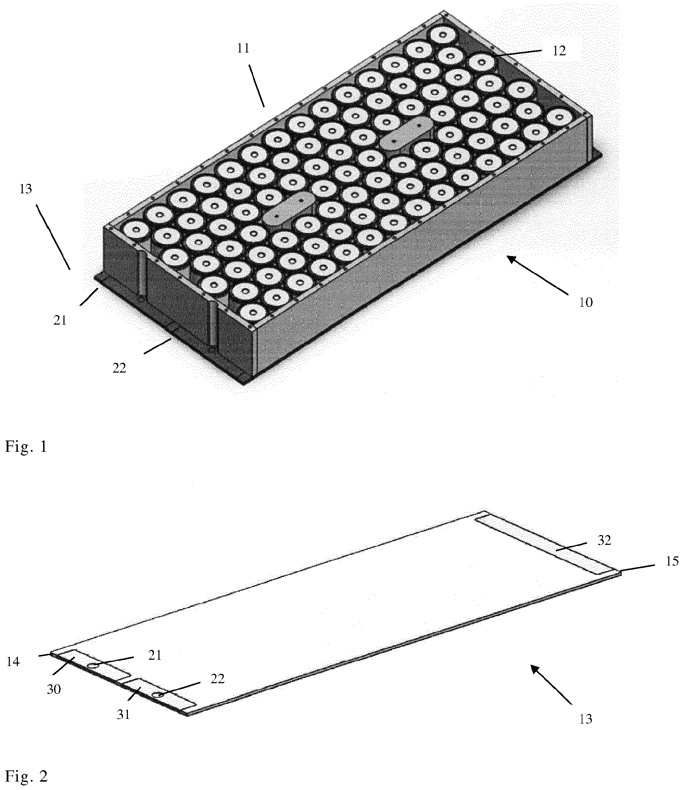

Die Fig. 1 zeigt eine beispielhafte Ausführung des erfindungsgemäßen Batteriemoduls 10 für ein Kraftfahrzeug. Es hat einen Batterieraum zur Aufnahme mehrerer Batteriezellen 11, z.B. wie in diesem Beispiel zylindrischer Batteriezellen 11, aber auch für prismatische Zellen oder Pouchzellen. Der Batterieraum wird von einem aus Seitenwandprofilen gebildeten geschlossenen Rahmen 12 umgeben und unten von einem Boden verschlossen. Der Boden wird hier von einem stranggepressten Mehrkammerprofil aus einer Aluminiumlegierung gebildet. Dieses Mehrkammerprofil dient als Kühlprofil 13. Der Rahmen 12 kann ebenfalls aus extrudierten Aluminiumprofilen bestehen, die mit dem Kühlprofil 13 verbunden sind. Die Verbindung kann beispielsweise durch Kleben, Schweißen oder Schrauben erfolgen. Zusätzlich können Mittenstege vorhanden sein, welche die Biegesteifigkeit des Bodens erhöhen.

Der Boden aus dem stranggepresstes Kühlprofil 13 mit den Abdeckungen 30, 31, 32 ist separat in Fig. 2 gezeigt. Das Kühlprofil 13 besteht in diesem Beispiel aus einem Mehrkammerhohlprofil aus einer Al-Mg-Si-Legierung mit der folgenden Zusammensetzung:

| | |
|---|---|
| Mg | 0,42 % |
| Si | 0,43 % |
| Fe | 0,20 % |
| Cu | 0,01 % |
| Mn | 0,01 % |
| Cr | 0,01 % |
| Zn | 0,01 % |
| Ti | 0,02 % |

Rest Aluminium.

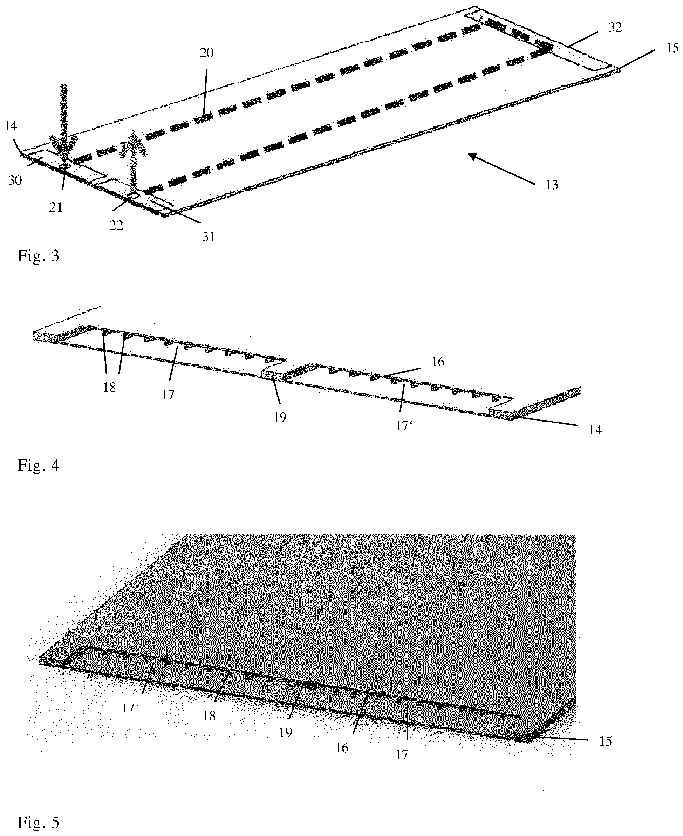

Bei diesem Kühlprofil 13 beträgt das Verhältnis zwischen Profilhöhe und Profilbreite etwa 1:68, nämlich bei einer Profilhöhe von 4,5 mm und bei einer Breite von 306 mm. Um noch größere Gesamtbreiten für einen Batterieboden zu realisieren, werden mehrere stranggepresste Mehrkammerhohlprofile längsseits aneinandergefügt. Dadurch kann beispielsweise eine Breite erzielt werden, welche der Fahrzeugbreite entspricht. Das Fügen der Mehrkammerhohlprofile wird bevorzugt mit einem Schweißverfahren vorgenommen. Bei dem Schweißverfahren handelt es sich beispielsweise um ein Laser- oder um ein Rührreibschweißverfahren. Hierzu sind breite massive Längsränder am stranggepressten Mehrkammerhohlprofil von Vorteil. Die Längsränder am Kühlprofil 13, wie sie in den Fig. 4 und 5 gezeigt sind, haben beispielsweise eine Breite von 10 mm. Solche Längsränder können auch zum Verschrauben mit dem Rahmen 12 dienen oder auch für andere Verbindungsverfahren.

Das Kühlprofil 13 aus dem flaches Mehrkammerhohlprofil hat mehrere, nebeneinander angeordneten Kammern 17, 17', welche durch Trennstege 18, 19 voneinander getrennt sind. Dies ist den Figuren 4 und 5 zu entnehmen. Der eine Trennsteg 19, welcher hier entlang der Mittelachse verläuft, ist breiter ausgebildet. Er trennt den Bereich mit den ersten Kammer 17 von dem Bereich mit den zweiten Kammern 17'. In diesem Beispiel haben die Trennstege 18 und die Profilwand 16 des Kühlprofils 13 eine Wanddicke von 1 mm. Der breitere Trennsteg 19 ist 10 mm breit. Der breite Trennsteg 19 erleichtert die saubere Abtrennung der unterschiedlichen Strömungsbereiche bei der spanenden Bearbeitung zur Erzeugung der Ausnehmungen am Kühlprofil 13.

Das Kühlprofil 13 wird von einem Kühlmedium durchströmt. Der Kühlmedienstrom 20 ist in Fig. 3 angedeutet. So wird an einem Ende 14 des Kühlprofils 13 das Kühlmedium durch einen Einlass 21 eingespeist und fließt dann durch die ersten Kammern 17. Am anderen Ende 15 des Kühlprofils 13 ändert sich die Strömungsrichtung und das Kühlmedium fließt durch die zweiten Kammern 17' des Kühlprofil 13 zurück zu einem Auslass 22.

Für diesen Kühlmediumstrom 20 müssen die Enden 14, 15 des Kühlprofils 13 entsprechend bearbeitet sein. Fig. 4 zeigt ein Ende 14 des Mehrkammerhohlprofils für das Kühlprofils 13, d.h. auf der Ein-und Auslassseite. Alle schmalen Trennstege 18 sind gekürzt und die obere Profilwand 16 ist oberhalb der Kammern 17, 17' zusammen mit den Trennstegen 18 gekürzt worden. Nur der Trennsteg 19 bleibt unverändert. Dadurch werden an diesem Ende 14 zwei Ausnehmungen erhalten, eine im Bereich des Einlass 21, vor den Kammern 17 und eine im Bereich des Auslass vor den Kammern 17'. Diese beiden Ausnehmungen sind durch die Abdeckelemente 30 und 31 abgedeckt. Die Abdeckelemente 30, 31, in diesem Fall geformte Aluminiumbleche, sind mit dem Kühlprofil 13 verbunden, siehe Fig. 2. Sie besitzen eine Öffnung für den Einlass 21 bzw. für den Auslass 22 des Kühlmediums. An dem gegenüberliegenden Ende 15 des Kühlprofils 13 ist auch ein Abdeckelement 32 montiert ist. Dieses begrenzt ebenfalls eine Ausnehmung, welche in Fig. 5 gezeigt ist. Diese Ausnehmung verbindet alle Kammern des Mehrkammerhohlprofils.

### Bezugszeichenliste

- 10: Batteriemodul
- 11: Batteriezelle
- 12: Rahmen
- 13: Kühlprofil
- 14: Ende
- 15: Ende
- 16: Profilwand, Oberseite
- 17, 17': Kammer
- 18: Trennsteg
- 19: Trennsteg, mittlere
- 20: Kühlmedienstrom
- 21: Einlass
- 22: Auslass
- 30: Abdeckelement mit 21
- 31: Abdeckelement mit 22
- 32: Abdeckelement

## Patentansprüche

1. Batteriemodul für ein Kraftfahrzeug, mit einem Batterieraum zur Aufnahme mehrerer Batteriezellen (11), mit einem aus Seitenwandprofilen gebildeten geschlossenen Rahmen (12), welcher den Batterieraum umgibt und einen Boden der den Batterieraum nach unten abschließt,
wobei der Boden ein stranggepresstes Kühlprofil (13) aus einer Aluminiumlegierung mit den Hauptlegierungselementen Magnesium und Silizium umfasst,
wobei das Kühlprofil (13) mindestens ein flaches Mehrkammerhohlprofil mit mehreren, nebeneinander angeordneten Kammern (17, 17') umfasst, welche durch Trennstege (18, 19) voneinander getrennt sind,
wobei ein Kühlmedium an einem Ende (14) des Kühlprofils (13) durch einen Einlass (21) einströmen, eine Anzahl von ersten Kammern (17) des Kühlprofils (13) durchströmen, am anderen Ende (15) des Kühlprofils (13) seine Strömungsrichtung ändern und nach der Strömungsumkehr durch eine weitere Anzahl von zweiten Kammern (17') des Kühlprofil (13) zurück zu einem Auslass (22) fließen kann,
wobei der eine Trennsteg (19), welcher zwischen einer ersten Kammer (17) und einer zweiten Kammer (17 `) angeordnet ist, eine größere Breite besitzt als die anderen Trennstege (18), welche jeweils zwischen den ersten Kammern (16) und welche zwischen den zweiten Kammern (17') vorhanden sind,
wobei die Breite des einen Trennstegs (19) wenigstens dem Mehrfachen der Breite der anderen Trennstege (18) entspricht.

2. Batteriemodul nach Anspruch 1, **dadurch gekennzeichnet, dass** der Boden aus dem stranggepresstes Kühlprofil (13) besteht und die Breite des Kühlprofils (13) mindestens dem 40-fachen der Höhe des Kühlprofils (13) entspricht.

3. Batteriemodul nach Anspruch 1 oder 2, **dadurch gekennzeichnet, dass** der Trennsteg (19), welcher zwischen einer ersten Kammer (17) und einer zweiten Kammer (17') angeordnet ist, entlang der Mittelachse des Kühlprofils (13) verläuft.

4. Batteriemodul nach einem der Ansprüche 1 bis 3, **dadurch gekennzeichnet, dass** die Wanddicke der Profilwand (16) und die Wanddicke der schmalen Trennstege (18) zwischen 0,8 mm und 2 mm, vorzugsweise zwischen 1,0 und 1,5 mm liegt, besonders bevorzugt 1 mm beträgt.

5. Batteriemodul nach einem der Ansprüche 1 bis 4, **dadurch gekennzeichnet, dass** die Wanddicke des breiteren Trennstegs zwischen 0,32 mm und 20 mm beträgt.

6. Batteriemodul nach einem der Ansprüche 1 bis 5, **dadurch gekennzeichnet, dass** das Kühlprofil (13) an seinen stirnseitigen Enden (14, 15) mittels zusätzlicher Abdeckelemente (30, 31, 32) verschlossen ist.

7. Batteriemodul nach Anspruch 6, **dadurch gekennzeichnet, dass** das Kühlprofil (13) für den Zufluss, für den Abfluss und die Strömungsumkehr des Kühlmediums jeweils an den Enden (14, 15) spanend bearbeitet ist und Ausnehmungen besitzt, welche von den zusätzlichen Abdeckelementen (30, 31, 32) abgedeckt werden.

8. Batteriemodul nach Anspruch 6, **dadurch gekennzeichnet, dass** für den Zufluss und für den Abfluss des Kühlmediums die Ausnehmungen an einem Ende (14) des Kühlprofils (13) eine endseitige Verkürzung der schmalen Trennstege (18) zwischen den ersten Kammern (17) sowie zwischen den zweiten Kammern (17') und auch eine einseitige Entfernung der Profilwand (16) in diesem Bereich betreffen, wobei der breitere Trennsteg (19) erhalten bleibt.

9. Batteriemodul nach Anspruch 6, **dadurch gekennzeichnet, dass** die Ausnehmung am anderen Ende (15) des Kühlprofils (13) für die Strömungsumkehr des Kühlmediums eine endseitige Verkürzung aller Trennstege (18, 19) und auch eine einseitige Entfernung der Profilwand (16) in diesem Bereich betreffen.

10. Batteriemodul nach einem der Ansprüche 6 bis 9, **dadurch gekennzeichnet, dass** Abdeckelemente (30, 31, 32) aus Edelstahl, Aluminium oder Kunststoff bestehen und durch Kleben mit dem Kühlprofil (13) verbunden sind.

11. Batteriemodul nach einem der Ansprüche 6 bis 9, **dadurch gekennzeichnet, dass** Abdeckelemente (30, 31, 32) aus Aluminium bestehen und durch Löten oder Schweißen mit dem Kühlprofil (13) verbunden sind, vorzugsweise durch ein Laserstrahlschweißverfahren.

12. Batteriemodul nach einem der Ansprüche 6 bis 11, **dadurch gekennzeichnet, dass** an dem einen Ende (14) die beiden Abdeckelemente (30, 31) integral einen Einlassstutzen bzw. einen Auslassstutzen umfassen.

13. Batteriemodul nach Anspruch 1 bis 12, wobei mehrere stranggepresste Mehrkammerhohlprofile das Kühlprofil (13) und den Boden des Batteriemoduls bilden, wobei die einzelnen Mehrkammerhohlprofile längsseitig aneinander gefügt sowie formschlüssig, stoffschlüssig und/oder kraftschlüssig miteinander verbunden sind, wobei ein einzelnes dieser Mehrkammerhohlprofile jeweils eine Breite von mindestens dem 40-fachen seiner Höhe aufweist.

14. Batteriemodul nach einem der Ansprüche 1 bis 13, **dadurch gekennzeichnet, dass** das Kühlprofil (13) mit dem Rahmen (12) verschraubt, verklebt, verlötet oder verschweißt ist.

## Claims

1. Battery module for a motor vehicle, having a battery compartment for accommodating a plurality of battery cells (11), having a closed frame (12) which is formed from side wall profiles and surrounds the battery compartment, and having a base that closes off the battery compartment at the bottom,
wherein the base comprises an extruded aluminium alloy cooling profile (13) having magnesium and silicon as main alloying elements,
wherein the cooling profile (13) comprises at least one flat multi-chamber hollow profile with several chambers arranged next to each other (17, 17'), which are separated from each other by separating webs (18, 19),
wherein a cooling medium can flow in at one end (14) of the cooling profile (13) through an inlet (21), flow through a number of initial chambers (17) of the cooling profile (13), change its flow direction at the other end (15) of the cooling profile (13) and, after the flow reversal, flow back through a further number of secondary chambers (17') of the cooling profile (13) to an outlet (22),
wherein the one divider (19) which is disposed between a first chamber (17) and a second chamber (17') has a greater width than the other dividers (18) which are respectively provided between the first chambers (16) and which are provided between the second chambers (17'),
wherein the width of one divider (19) is at least several times the width of the other divider (18).

2. Battery module according to claim 1, **characterised in that** the base consists of the extruded cooling profile (13) and the width of the cooling profile (13) is at least 40 times the height of the cooling profile (13).

3. Battery module according to claim 1 or 2, **characterised in that** the separating web (19), which is arranged between a first chamber (17) and a second chamber (17'), runs along the centre axis of the cooling profile (13).

4. Battery module according to one of claims 1 to 3, **characterised in that** the wall thickness of the profile wall (16) and the wall thickness of the narrow separating webs (18) is between 0.8 mm and 2 mm, preferably between 1.0 and 1.5 mm, particularly preferably 1 mm.

5. A battery module according to any one of claims 1 to 4, **characterised in that** the wall thickness of the wider divider is between 0.32 mm and 20 mm.

6. Battery module according to one of claims 1 to 5, **characterised in that** the cooling profile (13) is closed at its front ends (14, 15) by means of additional cover elements (30, 31, 32).

7. Battery module according to claim 6, **characterised in that** the cooling profile (13) for the inflow, for the outflow and for the flow reversal of the cooling medium is machined at the ends (14, 15) in each case and has recesses which are covered by the additional cover elements (30, 31, 32).

8. Battery module according to claim 6, **characterised in that**, for the inflow and for the outflow of the cooling medium, the recesses at one end (14) of the cooling profile (13) relate to an end-side shortening of the narrow separating webs (18) between the first chambers (17) and between the second chambers (17') and also to a one-sided removal of the profile wall (16) in this region, the wider separating web (19) remaining intact.

9. Battery module according to claim 6, **characterised in that** the recess at the other end (15) of the cooling profile (13) for the flow reversal of the cooling medium concerns an end-side shortening of all separating webs (18, 19) and also a one-sided removal of the profile wall (16) in this region.

10. Battery module according to one of the claims 6 to 9, **characterised in that** cover elements (30, 31, 32) consist of stainless steel, aluminium or plastic and are connected to the cooling profile (13) by adhesive bonding.

11. Battery module according to any one of claims 6 to 9, **characterised in that** cover elements (30, 31, 32) consist of aluminium and are connected to the cooling profile (13) by soldering or welding, preferably by a laser beam welding process.

12. A battery module according to any one of claims 6 to 11, **characterised in that** at the one end (14), the two cover members (30, 31) integrally comprise an inlet port and an outlet port respectively.

13. Battery module according to claim 1 to 12, wherein a plurality of extruded multi-chamber hollow profiles form the cooling profile (13) and the base of the battery module, wherein the individual multi-chamber hollow profiles are joined to one another longitudinally and are connected to one another in a form-fitting, material-fitting and/or force-fitting manner, wherein an individual one of these multi-chamber hollow profiles in each case has a width of at least 40 times its height.

14. Battery module according to one of claims 1 to 13, **characterised in that** the cooling profile (13) is screwed, glued, soldered or welded to the frame (12).

## Revendications

1. Module de batterie pour un véhicule automobile, avec un compartiment à batterie destiné à recevoir plusieurs cellules (11) de batterie, avec un cadre (12) fermé formé à partir de profilés de parois latérales, cadre qui entoure le compartiment à batterie et avec un fond qui termine le compartiment à batterie vers le bas,
sachant que le fond comprend un profilé de refroidissement (13) extrudé à la presse en alliage d'aluminium composé de magnésium et de silicium comme principaux éléments d'alliage,
sachant que le profilé de refroidissement (13) comprend au moins un profilé creux plat multichambres avec plusieurs chambres (17, 17') disposées côte-à-côte et séparées les unes des autres par des nervures de séparation (18, 19),
sachant qu'un fluide de refroidissement peut affluer par un orifice d'admission (21) à une extrémité (14) du profilé de refroidissement (13), qu'il peut traverser un certain nombre de premières chambres (17) du profilé de refroidissement (13), qu'il peut changer de direction d'écoulement à l'autre extrémité (15) du profilé de refroidissement (13) et qu'après avoir inversé sa direction d'écoulement il peut - via un certain nombre supplémentaire de deuxièmes chambres (17') du profilé de refroidissement (13) - regagner un orifice de sortie (22),
sachant que la nervure de séparation (19) qui est disposée entre une première chambre (17) et une deuxième chambre (17') présente une largeur plus importante que les autres nervures de séparation (18) présentes respectivement entre les premières chambres (16) et entre les deuxièmes chambres (17'),
sachant que la largeur de la nervure de séparation (19) correspond au moins au multiple de la largeur des autres nervures de séparation (18).

2. Module de batterie selon la revendication 1, **caractérisé en ce que** le fond se compose du profilé de refroidissement (13) extrudé à la presse et que la largeur du profilé de refroidissement (13) correspond à au moins 40 fois la hauteur du profilé de refroidissement (13).

3. Module de batterie selon la revendication 1 ou 2, **caractérisé en ce que** la nervure de séparation (19) qui est disposée entre une première chambre (17) et une deuxième chambre (17') s'étend le long de l'axe médian du profilé de refroidissement (13).

4. Module de batterie selon l'une des revendications 1 à 3, **caractérisé en ce que** l'épaisseur de la paroi (16) de profilé et l'épaisseur de paroi des nervures de séparation (18) étroites est comprise entre 0,8 mm et 2 mm, de préférence entre 1,0 mm et 1,5 mm, et que de manière particulièrement préférentielle elle est de 1 mm.

5. Module de batterie selon l'une des batteries 1 à 4, **caractérisé en ce que** l'épaisseur de paroi de la nervure de séparation plus large est comprise entre 0,32 mm et 20 mm.

6. Module de batterie selon l'une des revendications 1 à 5, **caractérisé en ce que** le profilé de refroidissement (13) est obturé, à ses extrémités frontales (14, 15), au moyen de d'éléments couvercles (30, 31, 32) supplémentaires.

7. Module de batterie selon la revendication 6, **caractérisé en ce que** le profilé de refroidissement (13) est usiné par enlèvement de copeaux aux extrémités respectives (14, 15) affectées à l'afflux, à l'évacuation et à l'inversion de la direction d'écoulement du fluide de refroidissement, et que ledit profilé possède des évidements recouverts par les éléments couvercles (30, 31, 32) supplémentaires.

8. Module de batterie selon la revendication 6, **caractérisé en ce que** pour l'afflux et l'évacuation du fluide de refroidissement, les évidements à une extrémité (14) du profilé de refroidissement (13) concernent un raccourcissement terminal des nervures de séparation (18) étroites entre les premières chambres (17) ainsi qu'entre les deuxièmes chambres (17') et aussi une distance unilatérale de la paroi profilée (16) dans cette zone, sachant que la nervure de séparation (19) plus large est conservée.

9. Module de batterie selon la revendication 6, **caractérisé en ce que** l'évidement à l'autre extrémité (15) du profilé de refroidissement (13) pour l'inversion d'écoulement du fluide de refroidissement concerne un raccourcissement à l'extrémité de toutes les nervures de séparation (18, 19) et aussi un éloignement unilatéral de la paroi profilée (16) dans cette zone.

10. Module de batterie selon l'une des revendications 6 à 9, **caractérisé en ce que** des éléments couvercles (30, 31, 32) sont en acier inoxydable, aluminium ou matière plastique et qu'ils sont reliés par collage avec le profilé de refroidissement (13).

11. Module de batterie selon l'une des revendications 6 à 9, **caractérisé en ce que** des éléments couvercles (30, 31, 32) sont en aluminium et qu'ils sont reliés par brasage ou soudage, de préférence par soudage laser, avec le profilé de refroidissement (13).

12. Module de batterie selon l'une des revendications 6 à 11, **caractérisé en ce qu'**à une extrémité (14) les deux éléments couvercles (30, 31) entourent intégralement un embout d'admission et un embout de sortie.

13. Module de batterie selon les revendications 1 à 12, sachant que plusieurs profilés creux multichambres extrudés à la presse forment le profilé de refroidissement (13) et le fond du module de batterie, sachant que les différents profilés creux multichambres sont juxtaposés longitudinalement et reliés entre eux par adhérence des formes, des matières et/ou des forces, sachant que chacun de ces profilés creux multichambres présente respectivement une largeur au moins 40 fois supérieure à sa hauteur.

14. Module de batterie selon l'une des revendications 1 à 13, **caractérisé en ce que** le profilé de refroidissement (13) est vissé, collé, brasé ou soudé contre le cadre (12).
